# EUROPÄISCHE PATENTSCHRIFT

(11) **EP 0 977 980 B1**
(45) Veröffentlichungstag und Bekanntmachung des Hinweises auf die Patenterteilung: **26.02.2003**
(21) Anmeldenummer: 98919275.2
(22) Anmeldetag: 16.04.1998
(51) Int. Cl.: G01N 15/02

(54) **VERFAHREN UND VORRICHTUNG ZUR QUANTITATIVEN UND QUALITATIVEN ON-LINE-DIFFERENZIERUNG VON BIOTISCHEN UND ABIOTISCHEN PARTIKELN**
METHOD AND DEVICE FOR QUANTITATIVE AND QUALITATIVE ON-LINE DIFFERENTIATION OF BIOTIC AND ABIOTIC PARTICLES
PROCEDE ET DISPOSITIF DE DIFFERENCIATION EN LIGNE QUANTITATIVE ET QUALITATIVE DE PARTICULES BIOTIQUES ET ABIOTIQUES

(30) Priorität: 21.04.1997 DE 19717749
(43) Veröffentlichungstag der Anmeldung: 09.02.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: KÖLBLIN, Rüdiger, D-70563 Stuttgart (DE); GRIMME, Ralf, D-74385 Pleidelsheim (DE)
(74) Vertreter: Pfenning, Meinig & Partner
(86) Internationale Anmeldenummer: EP9802239
(87) Internationale Veröffentlichungsnummer: WO98048259

(56) Entgegenhaltungen:
- US-A- 4 541 719
- US-A- 4 605 535
- US-A- 4 670 137
- US-A- 5 401 468

## Beschreibung

Die Erfindung bezieht sich auf ein Verfahren und eine Vorrichtung zur quantitativen und qualitativen on-line-Differenzierung von biotischen und abiotischen Partikeln.

Derartige Verfahren und Vorrichtungen werden zur Qualitätssicherung und Produktionsüberwachung sowie als Analyseverfahren für partikuläre Kontaminationen in gasförmigen Medien eingesetzt. Sie werden insbesondere im Bereich der Pharmazie, Lebensmitteltechnik, Medizintechnik, Biotechnologie, im Gesundheitswesen sowie zur Überwachung von MAK-Werten verwendet.

In diesen Bereichen spielt die biotische partikuläre Kontamination, insbesondere lebende partikuläre Kontaminationen wie zum Beispiel Luftkeime, in gasförmigen Medien wie zum Beispiel Umgebungsluft oder einer Inertgasatmosphäre eine besondere Rolle für die Qualität des Produktes bzw. für die Sicherheit des Produktionspersonals oder des Endverbrauchers und daher ist die Überwachung der Reinheit dieser gasförmigen Medien eine absolute Notwendigkeit und wird in den meisten Fällen zwingend vom Gesetzgeber vorgeschrieben.

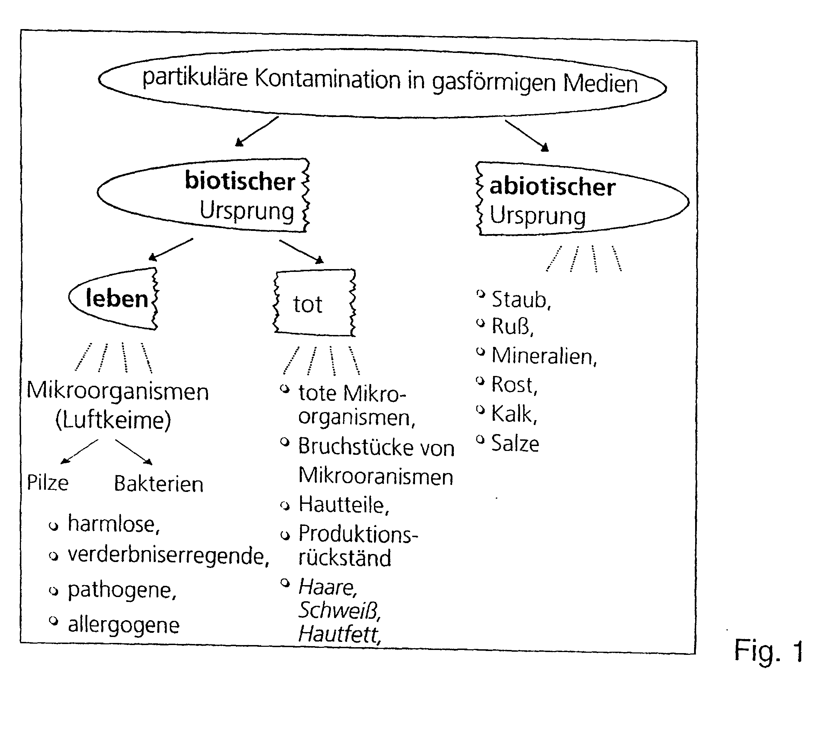

Fig. 1 zeigt die prinzipielle Einteilung der partikulären Kontaminationen in gasförmigen Medien in Partikel biotischen Ursprungs sowie abiotischen Ursprungs. Die Partikel biotischen Ursprungs können weiter unterteilt werden in lebende bzw. bereits tote Partikel. Als tote Partikel treten insbesondere tote Mikroorganismen oder Bruchstücke davon, Hautteile, Produktionsrückstände sowie Haare, Schweiß oder Hautfett auf. Die noch lebenden Partikel biotischen Ursprungs bestehen größtenteils aus Mikroorganismen wie Pilzen oder Bakterien (Luftkeimen) oder auch aus Keimen oder Sporen von Pflanzen.

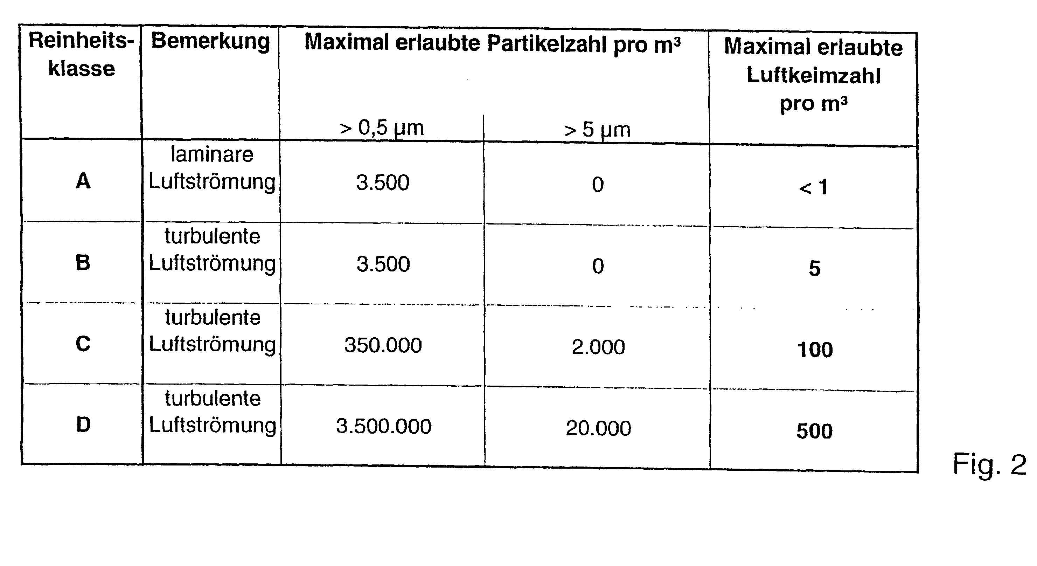

Innerhalb von sterilen Produktionen müssen dabei die von der Federal Drug Administration, von der Good Manufacturing Practices-Richtlinie oder dem Blatt 3 der VDI-Richtlinie 2083 vorgeschriebenen besonders strengen Grenzwerte für Partikel biotischen Ursprungs eingehalten werden. Diese Grenzwerte sind in Fig. 2 dargetellt. Durch diese Richtlinien werden weiterhin die Verfahren zur Bestimmung von Luftkeimzahlen vorgeschrieben.

Die nachfolgenden Verfahren beschreiben den Stand der Technik zur Bestimmung von lebenden partikulären Kontaminationen im gasförmigen Medien.

### Sedimentation

Bei diesem Verfahren werden Agarplatten in der zu vermessenden Atmosphäre offen ausgelegt. Anschließend werden die absedimentierten Mikroorganismen bestimmt. Eine Spezifizierung kann durch die Verwendung von Selektivnährböden erreicht werden.

### Filtration

Bei diesem Verfahren werden die in einem Gasvolumen enthaltenen Keime bzw. Keimverbände auf einem Filter abgeschieden, der von dem Gas durchströmt wird. Die Filter werden anschließend direkt auf einem geeigneten Nährboden aufgebracht. Alternativ kann die Filtermembran in einer sterilen physiologischen Nährlösung aufgelöst und diese anschließend gefiltert werden. Das Material der Membran ist zumeist Gelatine oder Celluloseester. Dieses quantitative Meßverfahren wird insbesondere bei sehr hohen Keimzahlen bzw. bei einer gleichzeitigen Überprüfung der Keime auf unterschiedlichen Selektivnährböden eingesetzt.

### Trägheitsabscheidung

Bei dieser Gruppe von Verfahren werden die Keime in verschiedenen Materialien, beispielsweise in Flüssigkeiten oder auf festen Nährböden abgeschieden. Ein Beispiel für ein derartiges Verfahren ist das Abscheiden der Keime mittels Glas-Impinger. Dieses Verfahren arbeitet nach dem Bubbler-Prinzip, in dem die zu vermessende Luft mit einer hohen Strömungsgeschwindigkeit durch eine Flüssigkeit geleitet wird. Die Luftkeime werden in der Flüssigkeit zurückgehalten und die restliche Luft entweicht in Form von Blasen. Aufgrund der hohen Luftgeschwindigkeiten muß der Flüssigkeit Antischaummittel zugesetzt werden. Zur Vermeidung einer ungewollten Vermehrung der Luftkeime in der Flüssigkeit ist eine zügige Weiterverarbeitung unerläßlich.

Bei der Abscheidung auf festen Nährböden unterscheidet man zwischen Zentrifugalsammlern, Siebsammlern, Schlitzsammlern bzw. der Elektropräzipitation. Bei den Zentrifugalsammlern wird ein definiertes Luftvolumen durch geeignete Strömungsführung in Rotation versetzt. Die in dem Luftvolumen befindlichen Partikel werden auf einen Agarstreifen aufgeschleudert, welcher sich an der zylindrischen Wand der Meßeinrichtung befindet. Anschließend wird der Agarstreifen bebrütet und wie üblich ausgezählt. Der Siebsammler arbeitet nach dem Prinzip des Mehrstufenimpaktors. Das Probenvolumen wird durch ein System von mehreren in Serie geschalteten Siebplatten angesaugt. Der Lochdurchmesser der einzelnen Siebplatten nimmt in Richtung der Strömungsführung ab und parallel zu den abnehmenden Lochdurchmessern zu. Die luftgetragenen Partikel werden aufgrund ihrer Trägheit und der immer schneller werdenden Strömung abhängig von ihrer Größe auf unterschiedlichen Siebplatten abgeschieden. Es erfolgt so eine Auftrennung der Partikel nach ihrer Größe. Beim Schlitzsammler wird das Probevolumen durch einen Schlitz angesaugt und mit einer hohen Geschwindigkeit auf eine rotierende Nährbodenplatte aufgeschleudert. Bei der Elektropräzipitation wird das Probevolumen gerichtet durch ein Hochspannungsfeld geleitet. Die elektrostatischen Kräfte sorgen hierbei für eine Abscheidung von geladenen Partikeln auf eine rotierende gegenteilig und entgegengesetzt geladene Oberfläche. Diese Oberfläche besteht in der Regel aus einem festen Nährboden, der anschließend bebrütet und ausgezählt wird.

Bei sämtlichen genannten Verfahren müssen die Luftpartikel aufgefangen werden, beispielsweise durch Auslegen von Petrischalen mit festen Nährböden, und anschließend bebrütet werden. Diese Prozedur kann bis zu fünf Tage dauern. Danach erfolgt eine genaue Beschreibung der ausgebrüteten Kulturen und die detaillierte Auswertung der Kontaminationsbelastung der Luft zum Zeitpunkt der Probennahme. Ein direktes Zurückverfolgen der möglichen Ursachen für die Kontaminierung ist durch die zeitliche Verschiebung meist nicht mehr möglich. Die in der Zwischenzeit produzierten und kontaminierten Produkte müssen im schlimmsten Fall komplett entsorgt werden. Nachteilig an den obengenannten Verfahren ist also, daß die Probennahme aufwendig vorbereitet werden muß, die Probe anschließend mehreren Verfahrensschritten unterworfen wird, wodurch sich die Kontaminationsgefahr während des Auswerteverfahrens stark erhöht und daß die Auswertung erst nach einer bestimmten Bebrütungszeit der Kulturen, im Durchschnitt 3 bis 5 Tage, erfolgen kann. Daher sind zumeist auch keine qualitativen Messungen möglich, zumal die Qualität der Messungen vom Verhalten des Bedienungspersonals stark abhängt. Diese Verfahren setzen daher hochqualifiziertes Personal voraus und sind nur gering automatisierbar.

Die JP-A 04-304898 offenbart ein Verfahren zur Bestimmung von Mikroorganismen in gasförmigen oder flüssigen Medien, bei dem der Brechungsindex der Partikel biotischen Ursprungs mit Hilfe einer Wärmebehandlung geändert wird. Aufgrund einer Messung des Brechnungsindexes vor sowie nach dieser Wärmebehandlung wird dann die Anzahl der Partikel biotischen Ursprungs bestimmt. Zur Wärmebehandlung wird das Medium für eine bis zehn Minuten auf 40° bis 80° C erwärmt und anschließend abgekühlt. Optimale Betriebsparameter ergeben sich bei einer Erwärmung für eine bis zwei Minuten auf 70° C. Im Ergebnis wird durch diese Behandlung das Protein der Partikel biotischen Ursprungs denaturiert und dadurch der Brechungsindex geändert. Gemäß der JP-A-04-304898 ändert sich bei dieser Wärmebehandlung die Größe der Partikel biotischen Ursprungs nicht wesentlich und kann daher nicht zur Differenzierung zwischen Partikeln biotischen und abiotischen Ursprungs verwendet werden. Weiterhin nachteilig an diesem Verfahren ist, daß die Dauer der Messungen im 10 Minuten-Bereich und damit zwar verglichen mit den oben geschilderten Verfahren aus dem Stand der Technik relativ kurz ist. Dennoch verhindert die Erwärmungsdauer von ein bis zehn Minuten und die anschließende Abkühlung seinen Einsatz als echtes on-line-Meßverfahren. Aufgrund der immer noch langen Erwärmungsdauer läßt sich lediglich ein Batchverfahren realisieren.

Aufgabe der vorliegenden Erfindung ist es, ein Verfahren und eine Vorrichtung zur quantitativen und qualitativen on-line-Differenzierung von biotischen und abiotischn Partikeln in einem gasförmigen Medium zu schaffen, das sehr kurze Reaktionszeiten für eine echte on-line-Messung, eine hohe Reproduzierbarkeit der Meßergebnisse aufweist und einen hohen Automatisierungsgrad und eine einfache Handhabung ermöglicht.

Diese Aufgabe wird durch das Verfahren und die Vorrichtung nach dem Oberbegriff der Ansprüche 1 und 9 in Verbindung mit ihren kennzeichnenden Merkmalen gelöst.

Die Lösung der erfindungsmäßen Aufgabe beruht auf einer gezielten Kombination der Bestimmung der Anzahl und Größe der in einem Medium vorhandenen Partikel mit der Veränderung von Partikel biotischen Ursprungs durch eine sehr kurze Erhitzung auf hohe Temperaturen, die oberhalb von 100° C liegen. Aufgrund der hohen Temperaturen ergeben sich lediglich sehr kurze Erhitzungsdauern im Bereich von Sekundenbruchteilen bis wenigen Sekunden. Durch diese Erhitzung schrumpfen die Partikel biotischen Ursprungs, beispielsweise durch Wasserabgabe oder auch mit geringerer Bedeutung Denaturierung der Proteine, und die Größenverteilung der Partikel in dem Medium verändert sich erkennbar. Durch Auswertung dieser Veränderungen ist es möglich, den Anteil von Partikeln biotischen Ursprungs an der Gesamtpartikelbelastung des Mediums unmittelbar innerhalb von Sekunden zu bestimmen.

Das erfindungsgemäße Verfahren ist daher kontinuierlich durchführbar und voll echtzeitfähig und stellt kein, wenn auch scheinbar kontinuierlich durchgeführtes, Batchverfahren wie im Stand der Technik dar. Die Reaktionszeiten für das Bedienpersonal auf Änderung in der Partikelzusammensetzung des Mediums werden drastisch verkürzt und die Meßergebnisse sehr reproduzierbar. Auch der Wirkungsgrad der Erfassung der Luftkeime ist aufgrund der hohen eingesetzten Temperaturen sehr groß.

Das erfindungsgemäße Verfahren und die mit wenigen Komponenten auskommende erfindungsgemäße Vorrichtung ermöglichen einen modularen, kompakten Geräteaufbau, eine hohe Gerätesicherheit und daher geringe Anlagenkosten sowie Betriebs- und Wartungskosten. Der Automatisierungsgrad dieser echt kontinuierlichen on-line-Messung ist sehr groß und daher ist eine einfache Handhabung des Verfahrens auch durch nicht speziell ausgebildetes Personal möglich.

Die Erfindung ermöglicht ein schnelles Reagieren auf negative Veränderungen bezüglich der partikulären Kontamination biotischen Ursprungs innerhalb gasförmiger Medien, so daß eine effektive Produktionsüberwachung und Qualitätssicherung möglich wird. Auch eine Differenzierung der Kontaminationsart innerhalb der einzelnen Kontaminationsgruppeh (biotischer Ursprung bzw. abiotischer Ursprung) ist mit diesem Verfahren möglich. Es ist unmittelbar einsichtig, daß aufgrund des unterschiedlichen Wassergehaltes der Partikel biotischen Ursprungs, beispielsweise Mikroorganismen mit hohem Wassergehalt bzw. pflanzliche Sporen mit extrem niedrigem Wassergehalt, die Temperatur und die Dauer der Erhitzung der Probe gemäß den zu bestimmenden Partikeln angepaßt werden muß. Die genauen einzuhaltenden Bedingungen lassen sich jedoch durch eine einfache Versuchsreihe bestimmen.

Vorteilhafte Weiterbildungen des erfindungsgemäßen Verfahrens sowie der erfindungsgemäßen Vorrichtung werden in den abhängigen Ansprüchen gegeben.

Eine besonders kurze Erhitzungsdauer sowie eine besonders starke Änderung der Größe der Partikel biotischen Ursprungs ergeben sich bei Temperaturen oberhalb von 200° C oder besser noch 400° C besonders vorteilhaft oberhalb 450° C. Viele Partikel biotischen Ursprungs ändern ihre Größe erst bei einer Erhitzung für wenige Sekunden auf Temperaturen oberhalb von 200 oder 400° C. Derartige kurzzeitige Hochtemperaturerhitzungen können durch Verwendung eines Röhrchens mit geringem Durchmesser, beispielsweise eine Kapillare, als Erhitzungskammer erzielt werden.

Zusätzlich zur Veränderung der Größe der Partikel biotischen Ursprungs können auch Änderungen weiterer physikalischer Partikelparameter, beipsielsweise des Brechungsindexes oder der Oberflächenstruktur der Partikel biotischen Ursprungs vor und nach der Erhitzung bestimmt und zusätzlich zur Differenzierung und Auswertung der Meßergebnisse herangezogen werden. Mit diesen Informationen kann auch eine Differenzierung innerhalb der Partikel biotischen Ursprungs weiter verbessert werden. Als Meßverfahren eignen sich hier insbesondere zur Bestimmung der Größe der Partikel Streulichtverfahren, wobei die Verwendung einer Mehrwinkelstreulichdetektion eine vollständige Beschreibung und höhere Sicherheit bei der Bestimmung dieser Eigenschaften ermöglicht.

Die Erhitzung der Probe kann vorteilhafterweise mit Hilfe eines Wärmeüberträgers beispielsweise durch Aufheizen des oben beschriebenen dünnen Rohres bzw. der oben beschriebenen dünnen Kapillare erfolgen.

Im folgenden werden einige Beispiele für das erfindungsgemäße Verfahren und die erfindungsgemäße Vorrichtung beschrieben.
- Fig. 1: zeigt die Differenzierung der partikulären Kontaminationen in gasförmigen Medien,
- Fig. 2: zeigt die nach verschiedenen Richtlinien einzuhaltenden Grenzwerte für partikuläre Kontaminationen in gasförmigen Medien,
- Fig. 3: zeigt den Aufbau einer erfindungsgemäßen Vorrichtung sowie ihr Meßprinzip,
- Fig. 4: zeigt den Aufbau eines erfindungsgemäßen Mehrwinkeldetektors,
- Fig. 5: zeigt Meßergebnisse vor und nach Erhitzung nach dem erfindungsgemäßen Verfahren,
- Fig. 6: zeigt Meßergebnisse nach dem erfindungsgemäßen Verfahren,
- Fig. 7: zeigt weitere Meßergebnisse nach dem erfindungsgemäßen Verfahren, und
- Fig. 8: zeigt weitere Meßergebnisse nach dem erfindungsgemäßen Verfahren.

Figuren 1 und 2 wurden bereits oben beschrieben und geben die biologischen Grundlagen der Partikeldifferenzierung sowie die gesetzlichen Grenzwerte für Partikelkontaminationen in Luft wieder.

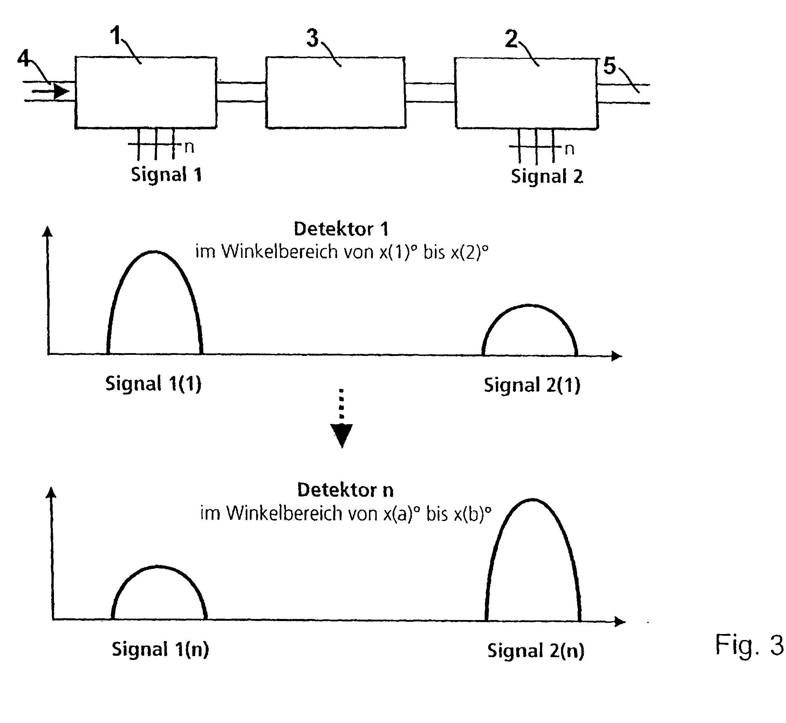

Fig. 3 zeigt eine erfindungsgemäße Vorrichtung, die zwei Streuwinkeldetektoren 1 und 2 sowie eine Erhitzungskammer 3 zur Erhitzung der Probe aufweist. Die Probe, deren Konzentration an Partikeln biotischen Ursprungs gemessen werden soll, wird durch einen Einlaß 4 in den ersten Streuwinkeldetektor 1 geleitet.

Dort werden winkelabhängig erste Signale von physikalischen Eigenschaften (wie z.B. Größe, Brechung) der in dem Medium enthaltenen Partikel erzeugt. Anschließend wird das gasförmige Medium in der Erhitzungskammer 3 erhitzt und anschließend in dem Streuwinkeldetektor 2 erneut gemessen und weitere Signale 2 ausgegeben. Nach dieser Messung wird das gasförmige Medium über den Auslaß 5 des Streuwinkeldetektors 2 aus der erfindungsgemäßen Meßvorrichtung ausgeblasen. Die beiden Diagramme in Fig. 3 zeigen die Meßsignale in Abhängigkeit von der Detektorspannung. Dies entspricht der Größenverteilung der Partikel in der Probe. Fig. 3 zeigt nun, wie sich die Größenverteilung durch die Erhitzung des Gases in der Erhitzungskammer 3 verändert. Dabei stellen die beiden Diagramme die Signale der Streuwinkeldetektoren 1 und 2 unter verschiedenen Streuwinkeln dar. Damit wird zugleich gezeigt, daß das Signal sowie seine Veränderung selbstverständlich von dem Winkel, unter dem das Streulicht beobachtet wird, abhängt. Weiterhin hängt die Streuung selbstverständlich auch von dem zur Erzeugung der von Streulicht auf das gasförmige Medium eingestrahlten Meßlicht ab.

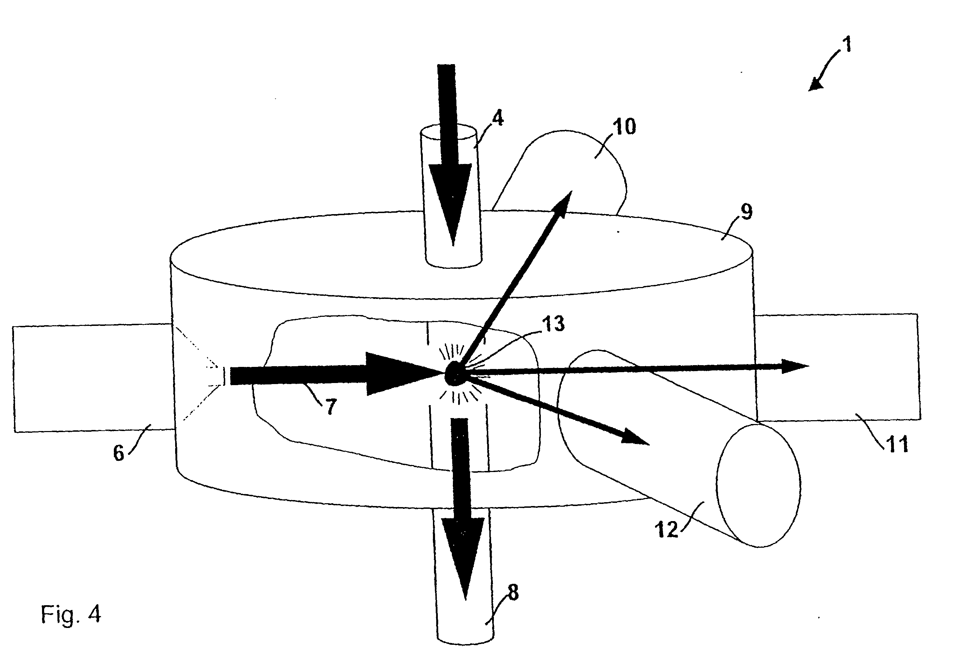

Fig. 4 zeigt einen erfindungsgemäßen Mehrwinkelstreulichtdetektor 1 mit einem Gaseinlaß 4, einem Gasauslaß 8 sowie drei Streulichteinzeldetektoren 10, 11 und 12, die entlang des Umfangs einer Meßkammer 9 angeordnet sind. Der erfindungsgemäße Mehrwinkelstreulichdetektor 1 weist weiterhin eine Laserlichtquelle 6 auf, die einen Laserstrahl 7 erzeugt. Der Laserstrahl 7 trifft an einer Meßstelle 13 auf den vom Einlaß 4 zum Auslaß 8 strömenden Gasstrom und erzeugt dort Streulicht, das unter drei verschiedenen Winkeln, die durch Pfeile eingezeichnet sind, durch die drei Detektoren 10, 11 und 12 erfaßt wird. Mit Hilfe dieser unterschiedlichen Detektionswinkel können parallel materialunabhängige (Beugung) und materialabhängige (Brechung, Reflexion) physikalische Eigenschaften erfaßt werden. Durch die Verwendung eines derartigen Mehrwinkeldetektors, der gleichzeitig das Streulichtsignal in mehreren unterschiedlichen, für die Erkennung einzelner physikalischer Effekte geeigneten Winkeln aufnimmt, kann somit eine differenzierte Aussage über die erzielten Veränderungen nicht nur der Größe sondern beispielsweise auch der Formoberfläche oder des Brechungsindexes getroffen werden. Bei dem erfindungsgemäßen Verfahren spielt jedoch die durch eine Erhitzung erzeugte Veränderung der Größe der Partikel die wesentliche Rolle.

Durch die Verwendung von zwei baugleichen Mehrwinkelstreulichtdetektoren zur Bestimmung der Größe der Partikel vor bzw. nach einer Erhitzung auf hohe Temperaturen wird eine Differenzmessung realisiert und die Unterscheidung von Kontaminationen biotischen und abiotischen Ursprungs ermöglicht. Das Ergebnis der Differenzmessung ergibt eine Aussage über die jeweilige Anzahl von Partikeln biotischen und abiotischen Ursprungs in der zu vermessenden Gasprobe. Dies findet seine Ursache darin, daß partikuläre Kontaminationen abiotischen Ursprungs keine Abhängigkeit der Größenverteilung von der Erhitzung zeigen. Daher sind Unterschiede der Messungen vor bzw. nach Erhitzung der Gasprobe ein Maß für die Partikelkontaminationen biologischen Ursprungs und ermöglichen so die genaue Bestimmung der Anzahl Partikel biotischen Ursprungs in der Gasprobe und damit einen direkten Rückschluß auf die Belastung des Mediums beispielsweise mit Luftkeimen.

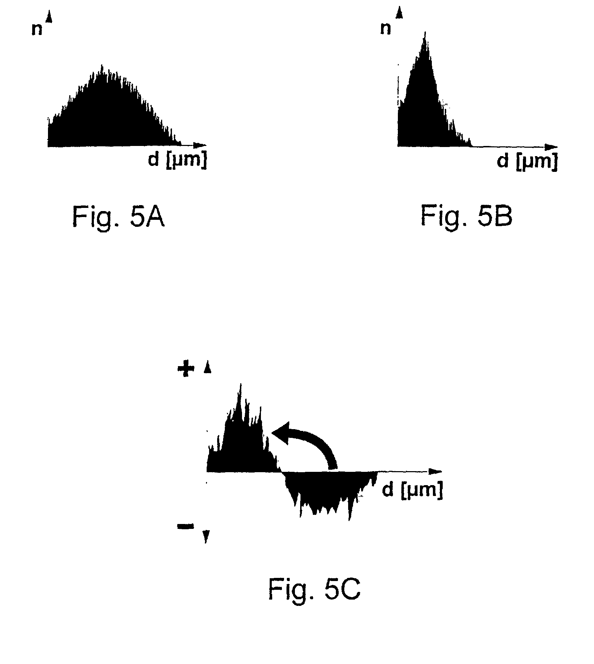

Fig. 5 zeigt modellhaft die Veränderung der Partikelgrößenverteilung durch eine Erhitzung einer Gasprobe auf 450° C für wenige Sekunden. Fig. 5A zeigt die Häufigkeit n an, mit der Partikel mit einem Durchmesser d in der nicht erhitzten Probe, d.h. in dem Detektor 1 auftreten. Fig. 5B zeigt die entsprechende Häufigkeitsverteilung der Partikelgrößen derselben Gasprobe in dem Detektor 2, d.h. nach Erhitzung des Probenvolumens. Fig. 5C zeigt die Differenz zwischen den beiden beschriebenen Häufigkeitsverteilungen. Es ist leicht ersichtlich, daß die Größe der Partikel biotischen Ursprungs durch die Erhitzung abgenommen hat, so daß der Anteil kleinerer Partikel zugenommen und der Anteil großer Partikel abgenommen hat. Aus dieser Änderung läßt sich nun auf einfache Art und Weise auf die Gesamtzahl der Partikel biotischen Ursprungs in der ursprünglichen Luftprobe schließen.

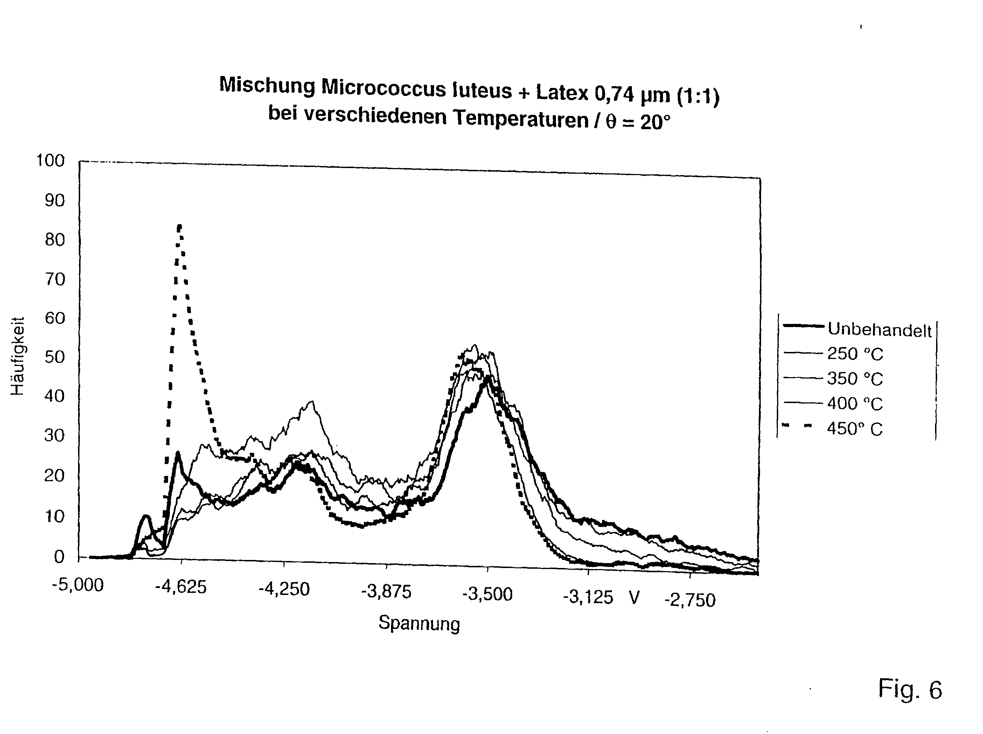

Fig. 6 zeigt die Abhängigkeit der Größenänderung der Partikel biotischen Ursprungs von der Erhitzungstemperatur. Für diese Messungen wurde eine Mischung aus Microcossus luteus und Latexpartikeln mit einem Durchmesser von 0,74 µm mit einem Mischungsverhältnis von 1 : 1 bei verschiedenen Temperaturen erhitzt. Das dargestellte Diagramm zeigt das Streulichtsignal unter einem Streuwinkel von 20° in Abhängigkeit von der Detektorspannung. Dies entspricht der oben geschilderten Häufigkeitsverteilung der Partikelgrößen. Es ist unmittelbar zu sehen, daß lediglich bei einer Erhitzung über 400° C die Größe der Micrococcus luteus-Organismen sich drastisch verringert. Erst bei diesen hohen Erhitzungstemperaturen nimmt der bei einer geringen negativen Detektorspannung erfaßte großvolumige Partikelanteil stark ab und es entsteht eine scharfe Häufigkeitsspitze bei hohen Detektorspannungen, d. h. bei kleinen Partikelgrößen. Diese bei hohen Temperaturen oberhalb 400° C auftretende Spitze entspricht den durch die Erhitzung in ihrer Größe stark geschrumpften Micrococcus luteus-Mikroorganismen, während die Latexpartikel durch die Erhitzung keine Veränderung ihrer Größe erfahren haben. Dieses Temperaturverhalten bestätigt auch, daß die Änderungen des Streulichtsignals im wesentlichen nicht Änderungen des Brechungsindexes aufgrund von Denaturierung der Proteine der Partikel biotischen Ursprungs widerspiegeln, da in diesem Falle bereits ab ca. 60 °C eine Signaländerung zu erwarten wäre.

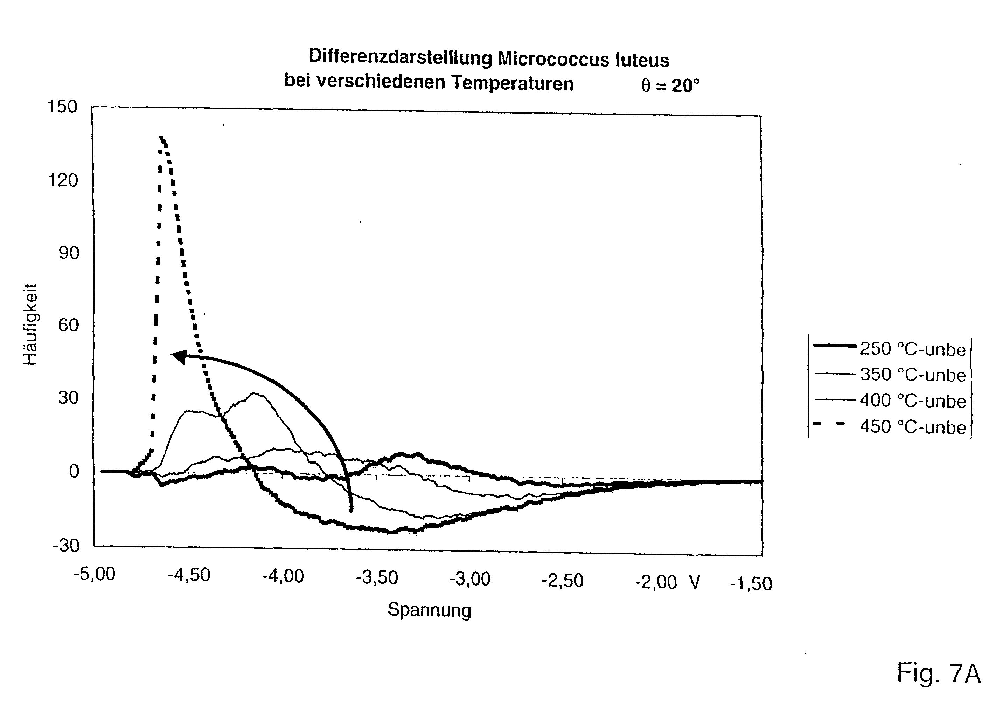

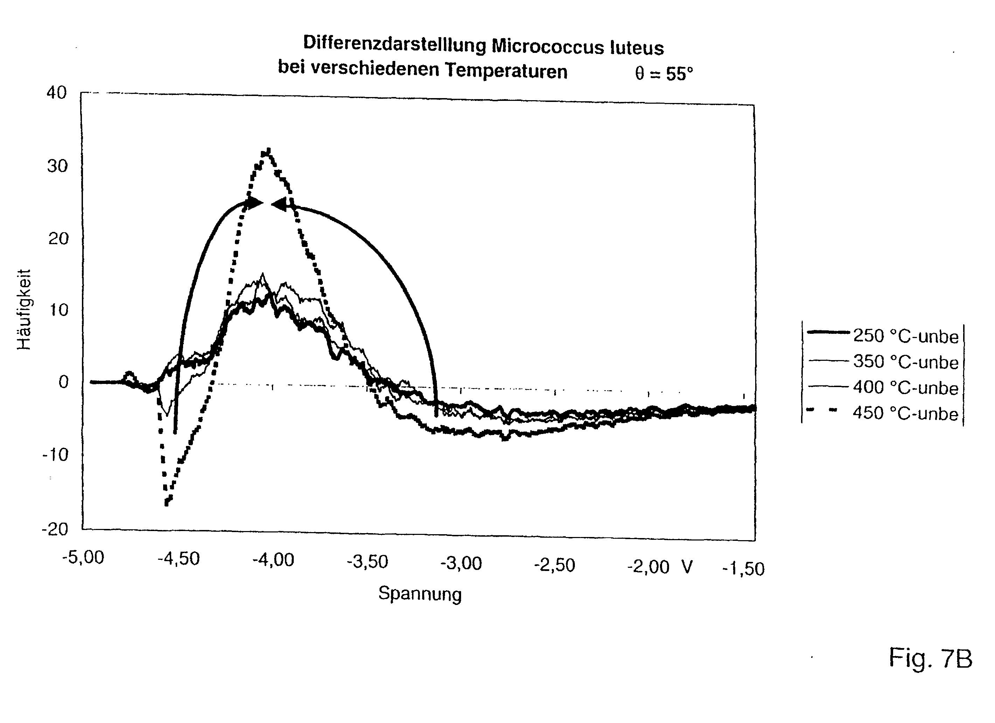

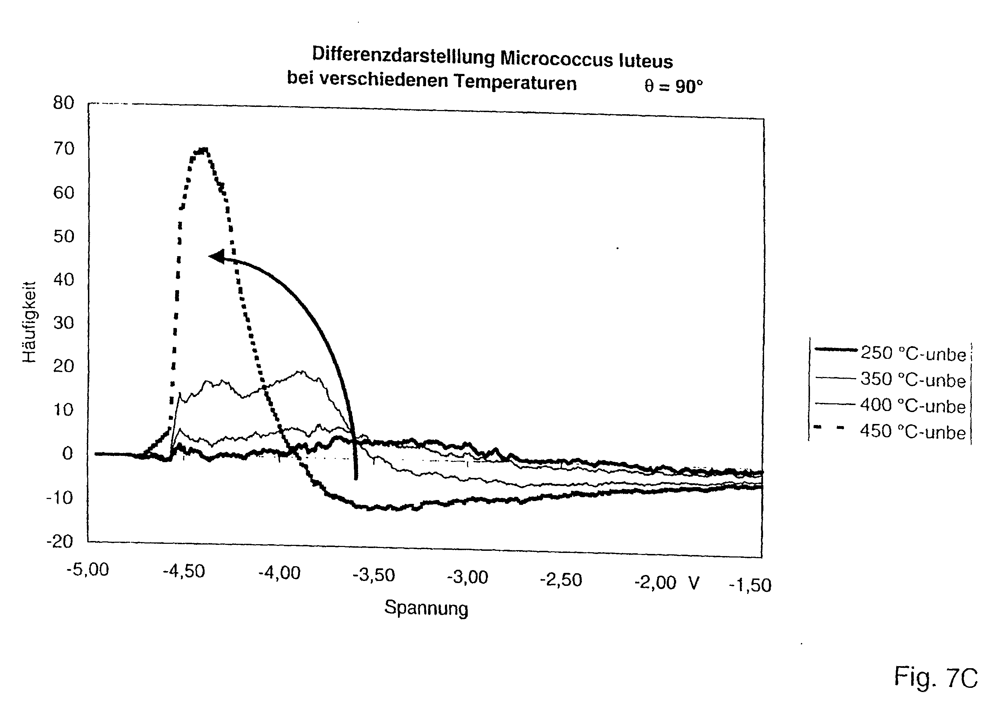

Fig. 7 zeigt die Veränderung der Größenverteilungen von Micrococcus luteus-Mikroorganismen durch Erhitzung bei unterschiedlichen Temperaturen. Dabei ist Fig. 7A unter einem Streuwinkel von 20°, Fig. 7B unter einem Streuwinkel von 55° und Fig. 7C unter einem Streuwinkel von 90° aufgenommen. Es ist unmittelbar zu sehen, daß die beobachteten Signalveränderungen von dem Beobachtungswinkel abhängen. Weiterhin ist jedoch allen drei Kurven 7A bis 7C zu entnehmen, daß erst bei Temperaturen von über 400° C eine merkliche Veränderung des Signals auftritt. Eine deutliche Veränderung des Signals, die sich für eine Auswertung hervorragend eignet, tritt erst bei Temperaturen um 450° C auf.

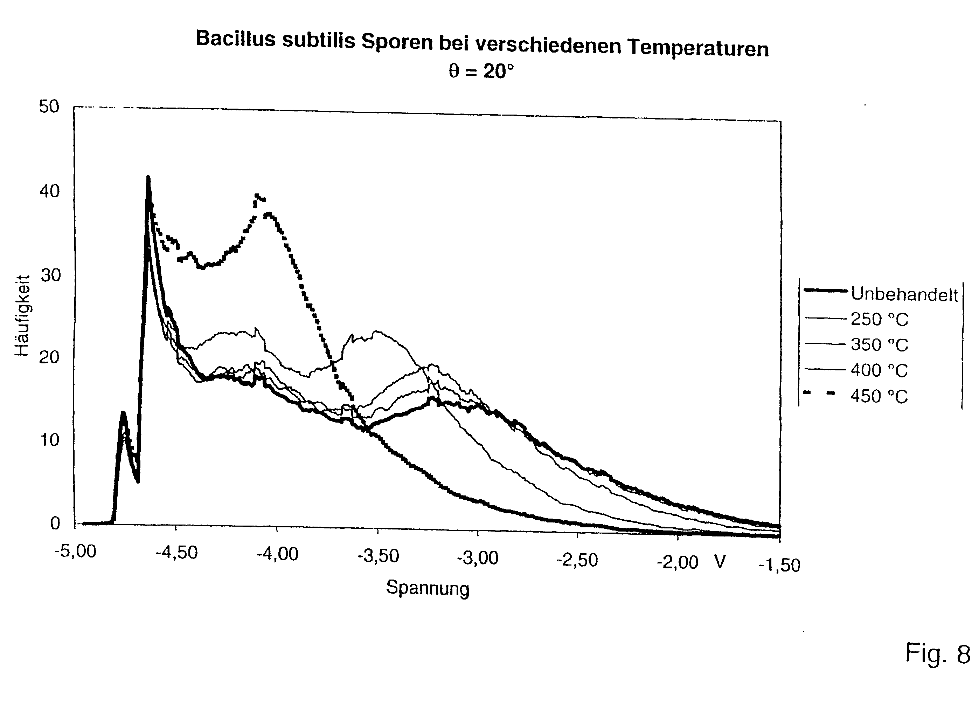

Fig. 8 zeigt ein weiteres Beispiel, bei dem das Streulichtsignal von Bazillus subtilis - Sporen unter einem Winkel von 20° nach Erhitzung auf verschiedene Temperaturen gemessen wurde. Obwohl Bazillus subtilis-Sporen einen sehr geringen Wassergehalt haben, läßt sich bei einer Erhitzung auf 400° C oder besser noch auf 450° C eine deutliche Änderung des Streulichtsignales, d. h. der Größenverteilung der Partikel beobachten.

Zusammenfassend läßt sich feststellen, daß mit der vorliegenden Erfindung ein Verfahren und eine Vorrichtung zur Verfügung gestellt wird, bei dem die Partikelkonzentration biotischen Ursprungs von der Partikelkonzentration abiotischen Ursprungs unterschieden und die Belastungen gasförmiger Medien durch Partikel biotischen Ursprungs sehr rasch, on-line und kontinuierlich bestimmt werden können. Dies beruht im wesentlichen auf der durch eine kurzzeitige Erhitzung auf sehr hohe Temperaturen verursachten Größenänderung der Partikel biotischen Ursprungs.

## Patentansprüche

1. Verfahren zur quantitativen und qualitativen on-line-Differenzierung von biotischen und abiotischen Partikeln in einem gasförmigen Medium, **dadurch gekennzeichnet, daß** in einer ersten Meßeinrichtung (1) die Anzahl und Größe der in dem gasförmigen Medium vorhandenen Partikel bestimmt, das gasförmige Medium für kurze Zeit auf Temperaturen oberhalb 100°C erhitzt, in einer zweiten Meßeinrichtung (2) die Anzahl und Größe der in dem erhitzten gasförmigen Medium vorhandenen Partikel bestimmt und aus den Ergebnissen der ersten und der zweiten Bestimmung die Anzahl und/oder Größe der biotischen und abiotischen in dem gasförmigen Medium vorhandenen Partikel ermittelt werden.

2. Verfahren nach Anspruch 1, **dadurch gekennzeichnet, daß** das Medium für wenige Sekunden auf Temperaturen oberhalb 200°C erhitzt wird.

3. Verfahren nach mindestens einem der vorhergehenden Ansprüche, **dadurch gekennzeichnet, daß** das Medium für wenige Sekunden auf Temperaturen oberhalb 400°C erhitzt wird.

4. Verfahren nach mindestens einem der vorhergehenden Ansprüche, **dadurch gekennzeichnet, daß** außer der Größenverteilung zugleich weitere physikalische Partikelparameter, beispielsweise die Verteilung des Brechungsindexes der Partikel, bestimmt werden.

5. Verfahren nach mindestens einem der vorhergehenden Ansprüche, **dadurch gekennzeichnet, daß** das Verfahren auf einen kontinuierlichen Strom gasförmigen Mediums angewandt wird.

6. Verfahren nach mindestens einem der vorhergehenden Ansprüche, **dadurch gekennzeichnet, daß** zur Erhitzung das gasförmige Medium durch ein dünnes, erhitztes Röhrchen (3) oder Kapillare geleitet wird.

7. Verfahren nach mindestens einem der vorhergehenden Ansprüche, **dadurch gekennzeichnet, daß** die Verteilung der Größe und/oder des Brechungsindexes der Partikel in dem gasförmigen Medium mittels eines Streulichtverfahren bestimmt wird.

8. Verfahren nach Anspruch 7, **dadurch gekennzeichnet, daß** unter mindestens zwei verschiedenen Winkel das von den Partikeln ausgehende Streulicht (Mehrwinkeldetektion) erfaßt wird.

9. Vorrichtung zur Durchführung des Verfahrens nach einem der vorhergehenden Ansprüche, **dadurch gekennzeichnet, daß** ein erster und ein zweiter Streulichtpartikelzähler (1, 2) mit je einem Einlaß (4) sowie einem Auslaß (5, 8) für gasförmige Medien sowie eine Erhitzungskammer (3) zur Erhitzung des gasförmigen Mediums für kurze Zeit auf Temperaturen oberhalb 100°C vorgesehen sind, wobei der Probenauslaß des ersten Streulichtpartikelzählers und der Probeneinlaß des zweiten Streulichtpartikelzählers durch die Erhitzungskammer (3) leitend miteinander verbunden sind.

10. Vorrichtung nach Anspruch 9, **dadurch gekennzeichnet, daß** die Streulichtpartikelzähler (1, 2) Mehrwinkeldetektoren sind.

11. Vorrichtung nach mindestens einem der Ansprüche 9 oder 10, **dadurch gekennzeichnet, daß** die Erhitzungskammer (3) ein dünnes Rohr mit einer Temperatur oberhalb 100°C aufweist.

12. Vorrichtung nach mindestens einem der Ansprüche 9 bis 11, **dadurch gekennzeichnet, daß** das Rohr eine Temperatur oberhalb 200°C aufweist.

13. Vorrichtung nach mindestens einem der Ansprüche 9 bis 12, **dadurch gekennzeichnet, daß** das Rohr eine Temperatur oberhalb 400°C aufweist.

14. Vorrichtung anch mindestens einem der Ansprüche 9 bis 13, **dadurch gekennzeichnet, daß** das Rohr eine Kapillare ist.

15. Vorrichtung nach mindestens einem der Ansprüche 9 bis 14, **dadurch gekennzeichnet, daß** an dem Rohr eine Wärmequelle angeordnet ist.

## Claims

1. Method of quantitative and qualitative on-line differentiating biotic and abiotic particles in a gaseous medium, **characterised in that**, in a first measuring facility (1), the number and size of the particles present in the gaseous medium are determined; that the gaseous medium is, for a short time, heated to temperatures above 100°C; that, in a second measuring facility (2), the number and size of the particles present in the heated gaseous medium are determined; and that, from the results of the first and second determinations, the number and/or size of the biotic and abiotic particles present in the gaseous medium are/is determined.

2. Method according to Claim 1, **characterised in that** the medium is, for a few seconds, heated to temperatures above 200°C.

3. Method according to at least one of the preceding Claims, **characterised in that** the medium is, for a few seconds, heated to temperatures above 400°C.

4. Method according to at least one of the preceding Claims, **characterised in that**, apart from size distribution, other physical particle parameters, e.g. distribution of the refractive index of the particles, are determined at the same time.

5. Method according to at least one of the preceding Claims, **characterised in that** the Method is applied to a continuous stream of gaseous medium.

6. Method according to at least one of the preceding Claims, **characterised in that**, for heating, the gaseous medium is led through a thin, heated tube (3) or capillary.

7. Method according to at least one of the preceding Claims, **characterised in that** distribution of the size and/or the refractive index of the particles in the gaseous medium is determined by means of a scattered-light process.

8. Method according to Claim 7, **characterised in that** the scattered light emanating from the particles is detected at at least two different angles (multiangle detection).

9. Device for carrying out the Method according to one of the preceding Claims, **characterised in that** first and second scattered-light particle counters (1, 2), each having an inlet (4) as well as an outlet (5, 8) for gaseous media, and a heating chamber (3) for heating, for a short time, the gaseous medium to temperatures above 100°C are provided, the sample outlet of the first scattered-light particle counter and the sample inlet of the second scattered-light particle counter being, through the heating chamber (3), conductively connected with each other.

10. Device according to Claim 9, **characterised in that** the scattered-light particle counters (1, 2) are multiangle detectors.

11. Device according to at least one of Claims 9 or 10, **characterised in that** the heating chamber (3) shows a thin tube with a temperature above 100°C.

12. Device according to at least one of Claims 9 to 11, **characterised in that** the tube has a temperature above 200°C.

13. Device according to at least one of Claims 9 to 12, **characterised in that** the tube has a temperature above 400°C.

14. Device according to at least one of Claims 9 to 13, **characterised in that** the tube is a capillary.

15. Device according to at least one of Claims 9 to 14, **characterised in that** a heat source is arranged on the tube.

## Revendications

1. Procédé de différenciation en ligne quantitative et qualitative de particules biotiques et de particules abiotiques dans un milieu gazeux, **caractérisé en ce qu'**on détermine, dans un premier dispositif de mesure (1), la quantité et la taille des particules présentes dans le milieu gazeux, on chauffe le milieu gazeux pendant un court intervalle à des températures supérieures à 100°C et on détermine, dans un second dispositif de mesure (2), le nombre et la taille des particules présentes dans le milieu gazeux chauffé et, à partir des résultats de la première et de la seconde déterminations, on établit le nombre et/ou la taille des particules biotiques et abiotiques présentes dans le milieu gazeux.

2. Procédé selon la revendication 1, **caractérisé en ce que** le milieu est chauffé pendant quelques secondes à des températures supérieures à 200°C.

3. Procédé selon au moins l'une quelconque des revendications précédentes, **caractérisé en ce que** le milieu est chauffé pendant quelques secondes à des températures supérieures à 400°C.

4. Procédé selon au moins l'une quelconque des revendications précédentes, **caractérisé en ce que**, en dehors de la répartition de taille, on détermine également d'autres paramètres physiques des particules, par exemple la distribution de l'indice de réfraction des particules.

5. Procédé selon au moins l'une quelconque des revendications précédentes, **caractérisé en ce que** le procédé est appliqué à un courant continu de milieu gazeux.

6. Procédé selon au moins l'une quelconque des revendications précédentes, **caractérisé en ce que**, pour le chauffage, le milieu gazeux est acheminé à travers un petit tube mince ou capillaire (3) chauffé.

7. Procédé selon au moins l'une quelconque des revendications précédentes, **caractérisé en ce que** la distribution de taille et/ou d'indice de réfraction des particules dans le milieu gazeux est déterminée au moyen d'un procédé à diffusion de lumière.

8. Procédé selon la revendication 7, **caractérisé en ce que** la lumière diffusée provenant des particules est saisie (détection sous des angles multiples) sous au moins deux angles différents.

9. Dispositif pour la réalisation du procédé selon l'une quelconque des revendications précédentes, **caractérisé en ce qu'**il est prévu un premier et un second compteurs de particules à lumière diffusée (1,2) comprenant respectivement une entrée (4) et une sortie (5, 8) pour le milieu gazeux ainsi qu'une chambre de chauffage (3) pour chauffer le milieu gazeux pendant un court intervalle à des températures supérieures à 100°C, la sortie d'échantillon du premier compteur de particules à lumière diffusée et l'entrée d'échantillon du second compteur de particules à lumière diffusée étant raccordées l'une à l'autre de manière conductrice à travers la chambre de chauffage (3).

10. Dispositif selon la revendication 9, **caractérisé en ce que** les compteurs de particules à lumière diffusée (1, 2) sont des détecteurs sous des angles multiples.

11. Dispositif selon au moins l'une quelconque des revendications 9 ou 10, **caractérisé en ce que** la chambre de chauffage (3) présente un tube mince avec une température supérieure à 100°C.

12. Dispositif selon au moins l'une quelconque des revendications 9 à 11, **caractérisé en ce que** le tube présente une température supérieure à 200°C.

13. Dispositif selon au moins l'une quelconque des revendications 9 à 12, **caractérisé en ce que** le tube présente une température supérieure à 400°C.

14. Dispositif selon au moins l'une quelconque des revendications 9 à 13, **caractérisé en ce que** le tube est un capillaire.

15. Dispositif selon au moins l'une quelconque des revendications 9 à 14, **caractérisé en ce qu'**une source de chaleur est agencée sur le tube.
